(19) **Europäisches Patentamt / European Patent Office / Office européen des brevets**

(11) **EP 4 696 814 A1**

(12) **EUROPEAN PATENT APPLICATION**
published in accordance with Art. 153(4) EPC

(43) Date of publication:
**18.02.2026 Bulletin 2026/08**

(21) Application number: **24807038.5**

(22) Date of filing: **30.04.2024**

(51) International Patent Classification (IPC):
**C23C 26/00** (2006.01)     **B05D 3/12** (2006.01)
**B05D 7/14** (2006.01)       **B05D 7/24** (2006.01)
**C09D 5/00** (2006.01)       **C09D 7/61** (2018.01)
**C09D 183/02** (2006.01)     **C09D 183/04** (2006.01)
**C09D 201/00** (2006.01)     **C09J 5/00** (2006.01)
**C09J 7/30** (2018.01)       **C09J 201/00** (2006.01)
**C23C 28/00** (2006.01)

(52) Cooperative Patent Classification (CPC):
**B05D 3/12; B05D 7/14; B05D 7/24; C09D 5/00;
C09D 7/61; C09D 183/02; C09D 183/04;
C09D 201/00; C09J 5/00; C09J 7/30; C09J 201/00;
C23C 26/00; C23C 28/00**

(86) International application number:
**PCT/JP2024/016665**

(87) International publication number:
**WO 2024/237084 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 JP 2023080412**

(71) Applicant: **KABUSHIKI KAISHA KOBE SEIKO
SHO (KOBE STEEL, LTD.)
Hyogo 651-8585 (JP)**

(72) Inventors:
• **TAKAHASHI Yusuke
  Kobe-shi,
  Hyogo 651-2271 (JP)**
• **KATSUNO Daiki
  Kobe-shi,
  Hyogo 651-2271 (JP)**
• **YAMAMOTO Shintaro
  Kobe-shi,
  Hyogo 651-2271 (JP)**

(74) Representative: **Müller-Boré & Partner
Patentanwälte PartG mbB
Friedenheimer Brücke 21
80639 München (DE)**

(54) **METHOD FOR MANUFACTURING SURFACE-TREATED METAL MATERIAL AND METHOD FOR MANUFACTURING JOINED BODY**

(57) To provide a method for producing a surface-treated metal material that does not require a complicated pretreatment step or pretreatment solution prior to a step of forming a film on a surface, thereby reducing a burden on the environment and enabling a surface-treated film to be formed easily at a low cost. A method for producing a surface-treated metal material in which a silane film is provided on at least a part of a surface of a metal base material (1) includes: a blast treatment step of projecting abrasive grains (2) for a blast treatment onto at least a part (region R) on the surface of the metal base material; a coating step of coating, with a metal treatment solution containing a silane compound, the surface of the metal base material (1) subjected to the blast treatment; and a drying step of drying the metal base material (1) coated with the metal treatment solution to form a silane film.

*FIG.1A*

EP 4 696 814 A1

**Description**

TECHNICAL FIELD

The present invention relates to a method for producing a surface-treated metal material and a method for producing a joined body including the surface-treated metal material.

BACKGROUND ART

In the field of transportation machines such as automobiles, ships, and aircrafts, from the viewpoint of weight reduction, adhesive joining is used as a joining technique between a steel material and a different material such as a lightweight material (an aluminum alloy, a titanium alloy, a carbon fiber, and the like). In addition, from the viewpoint of improving productivity and workability, the adhesive joining also has attracted attention as a welding alternative technique in response to on-site problems such as shortage of welding worker, technical preservation, and improvement in work environment.

On the other hand, the adhesive joining has a problem in strength reliability over a long-term use, and it is known that, as compared with the case of welding or bolt fastening, the strength is likely to decrease in a high-temperature and high-humidity environment or an environment in which a stress such as fatigue or creep acts in combination. In the adhesive joining, adhesion between an adhesive and a metal to be adhered is important, and when the adhesion between a surface of a metal material and the adhesive is insufficient, water enters an interface between a metal and a resin. As a result, erosion on the surface of the metal progresses, and peeling off occurs from the interface therebetween, so that an adhesive strength greatly decreases. Therefore, it is necessary to improve the adhesion between the metal and the adhesive resin to prevent water from entering the adhesion interface, and it is necessary to modify the surface of the metal material and adjust a surface state to a surface state suitable for adhesion such that the surface state of the metal does not easily change even when water enters.

In order to solve the above problems, various surface treatment techniques have been proposed. For example, Patent Literature 1 proposes a method for producing an aluminum surface-treated material including an applying step of applying, in a predetermined application amount, a treatment solution containing a silane compound to a surface of a base material made of an Al-Mg-based alloy or an Al-Mg-Si-based alloy. In addition, the method for producing an aluminum surface-treated material includes, after the applying step, a drying step of drying the treatment solution to form a film, and a water washing step of forming a film having a predetermined film amount and element concentration ratio, and accordingly, a film having excellent adhesive durability can be formed.

In addition, Patent Literature 2 proposes a method for producing an aluminum alloy material including an oxide film forming step of forming a predetermined oxide film on at least a part of a surface of an aluminum alloy base material, and a surface-treated film forming step of applying a specific aqueous solution to at least a part of the oxide film. The aqueous solution contains a silicate of the oxide film and an organic silane compound, and the pH is adjusted. Accordingly, it is possible to produce an aluminum alloy material that is less likely to decrease in adhesive strength, that has excellent adhesive durability, and that has excellent productivity.

Further, Patent Literature 3 discloses an aluminum coating material in which a silica-containing film containing water-dispersible silica, phosphoric acid, and a silane coupling agent is formed as an adhesion base film on a surface of an aluminum material. In the silica-containing film, a mass ratio of a content of P to a content of Si is specified, and accordingly, excellent adhesion strength and erosion resistance can be obtained.

Furthermore, Patent Literature 4 discloses an adjustment method including a step of roll-coating a prepared aluminum alloy product with an aqueous functionalizing solution, and a step of drying the aluminum alloy product. The aqueous functionalizing solution contains a first monomer constituent component and a second polymer constituent component, and a relationship between component amounts of the respective components is adjusted. Accordingly, joining durability can be improved.

Moreover, Patent Literature 5 describes a method for producing a surface-treated aluminum alloy sheet or plate, in which a substrate made of an aluminum alloy containing Mg is subjected to an acid etching treatment such that an etching amount E satisfies a predetermined relationship, and the substrate is subjected to a chemical conversion treatment to form an inorganic film containing Mg, Ti, and Zr. According to the production method described in Patent Literature 5, a surface-treated aluminum alloy sheet or plate having excellent adhesive durability can be obtained.

CITATION LIST

PATENT LITERATURE

Patent Literature 1: JP2017-197838A
Patent Literature 2: JP2017-203209A
Patent Literature 3: WO2018/207685
Patent Literature 4: JP2020-528339A
Patent Literature 5: JP7084957B

## SUMMARY OF INVENTION

### TECHNICAL PROBLEM

However, the techniques described in Patent Literature 1 to 5 require, in a pretreatment step of a surface treatment, a degreasing treatment using an alkaline aqueous solution for removing dirt such as oil adhering to the material surface, and a pickling treatment using sulfuric acid, hydrofluoric acid, or nitric acid for removing an oxide film. In addition, in Patent Literatures 3 to 5, an acidic treatment solution containing hydrofluoric acid or phosphoric acid is also used in the surface treatment step. Therefore, it is necessary to design a treatment facility using a high erosion resistance metal such as stainless steel, and even when the treatment facility is prepared using such a high erosion resistance metal, the facility deteriorates due to the chemicals after a long-term use.

Further, since a large amount of waste liquid containing an alkali, an acid, hydrofluoric acid, and phosphoric acid is generated in the surface treatment and the pretreatment step, an industrial waste treatment for the waste liquid is required. Furthermore, the alkali, the acid, and various chemicals contained in the surface treatment solution are consumed along with the surface treatment on the material, and instead, the solution deteriorates with elution of the metal of the matrix. Therefore, it is necessary to monitor a state of the solution constantly, and strictly control treatment conditions such as adjustment of a treatment temperature or a treatment time or replenishing of the chemical, according to the state of the solution. Such a process is not desirable from the viewpoint of environment, economy, and production, and in order to achieve a sustainable social goal, which is an issue of human beings in recent years, it is necessary to prevent a large amount of such a harmful waste liquid from being generated and to improve the process disadvantageous in productivity and economy.

The present invention has been made in view of such problems, and an object of the present invention is to a method for producing a surface-treated metal material that does not require a complicated pretreatment step or pretreatment solution prior to a step of forming a film on a surface, thereby reducing a burden on the environment and enabling a surface-treated film to be formed easily at a low cost, and a method for producing a joined body including the surface-treated metal material.

### SOLUTION TO PROBLEM

The above object of the present invention is achieved by the following configuration [1] related to a method for producing a surface-treated metal material.

[1] A method for producing a surface-treated metal material in which a silane film is provided on at least a part of a surface of a metal base material, the method including:

a blast treatment step of performing a blast treatment on at least a part of the surface of the metal base material;
a coating step of coating, with a metal treatment solution containing a silane compound, the surface of the metal base material subjected to the blast treatment; and
a drying step of drying the metal base material coated with the metal treatment solution to form a silane film.
Preferred embodiments of the present invention related to the method for producing a surface-treated metal material relate to the following [2] to [10].

[2] The method for producing a surface-treated metal material according to [1], in which a cleaning step is not performed after the drying step.
[3] The method for producing a surface-treated metal material according to [1] or [2], in which

the metal treatment solution contains the silane compound in a content of 0.01 mass% or more and 1 mass% or less, and
the silane compound contains an alkyl silicate or an oligomer thereof and a hydrolysate of an organic silane compound or a polymer thereof.

[4] The method for producing a surface-treated metal material according to any one of [1] to [3], further including:

a water washing step of washing, with water, the metal base material subjected to the blast treatment, between the blast treatment step and the coating step, in which
the coating step is performed in a state where water in the water washing step adheres to the surface subjected to the blast treatment.

[5] The method for producing a surface-treated metal material according to any one of [1] to [4], in which a time from an end of the blast treatment step to a start of the coating step is within 8 hours.
[6] The method for producing a surface-treated metal material according to any one of [1] to [5], in which a content of a particulate inorganic compound having a diameter of 1 nm or more is 0.05 mass% or less with respect to a total mass of the metal treatment solution.
[7] The method for producing a surface-treated metal material according to any one of [1] to [6], in which

the coating step includes

an applying step of applying the metal treatment solution to the metal base material to coat the surface of the metal base material with the metal treatment solution, and
a recovery step of recovering excess metal treatment solution generated in the applying step, and

the excess metal treatment solution is reused in the coating step during production of another surface-treated metal material.

[8] The method for producing a surface-treated metal material according to any one of [1] to [6], in which
the coating step includes an immersion step of immersing the metal base material in the metal treatment solution to coat the surface of the metal base material with the metal treatment solution.
[9] The method for producing a surface-treated metal material according to any one of [1] to [8], in which the silane film is an object onto which an adhesive or a coating material is directly coated on its surface.
[10] The method for producing a surface-treated metal material according to [9], in which

the surface-treated metal material has a functional layer in contact with the surface of the silane film,
the functional layer is an adhesive resin layer or a coating film formed of the adhesive or the coating material, and
the method includes a functional layer forming step of forming the functional layer on the surface of the silane film after the drying step.

The above object of the present invention is achieved by the following configuration [11] related to a method for producing a joined body.
[11] A method for producing a joined body including a surface-treated metal material produced by the production method according to any one of [1] to [8], the method including:

a joining step of joining a first member and a second member via an adhesive resin layer, in which
at least one of the first member and the second member is the surface-treated metal material, and
in the joining step, the silane film of the surface-treated metal material and the adhesive resin layer are disposed so as to be in contact with each other, and the first member and the second member are joined to each other.

ADVANTAGEOUS EFFECTS OF INVENTION

According to the present invention, it is possible to provide to a method for producing a surface-treated metal material that does not require a complicated pretreatment step or pretreatment solution prior to a step of forming a film on a surface, thereby reducing a burden on the environment and enabling a surface-treated film to be formed easily at a low cost, and a method for producing a joined body including the surface-treated metal material.

BRIEF DESCRIPTION OF DRAWINGS

[Fig. 1A] Fig. 1A is a diagram showing a method for producing a surface-treated metal material according to an embodiment of the present invention in order of steps, and is a perspective view showing a blast treatment step.
[Fig. 1B] Fig. 1B is a diagram showing the method for producing a surface-treated metal material according to the embodiment of the present invention in order of steps, and is a perspective view showing a coating step.

[Fig. 1C] Fig. 1C is a diagram showing the method for producing a surface-treated metal material according to the embodiment of the present invention in order of steps, and is a perspective view showing a drying step.

[Fig. 2A] Fig. 2A is a side view showing a shape of a joined body.

[Fig. 2B] Fig. 2B is a plan view showing the shape of the joined body.

DESCRIPTION OF EMBODIMENTS

The present inventors have conducted intensive studies on a method for producing a surface-treated metal material that can be applied to adhesive joining even using a poorly adhesive metal material such as stainless steel or titanium, that can realize resource saving and energy saving, and that can be easily produced at a low cost. As a result, the present inventors have found that the above problems can be solved by using a silane film having excellent adhesiveness to an adhesive resin and by simplifying a pretreatment of a step of forming the silane film. Hereinafter, a method for producing a surface-treated metal material according to an embodiment of the present invention will be described.

[Method For Producing Surface-treated Metal Material]

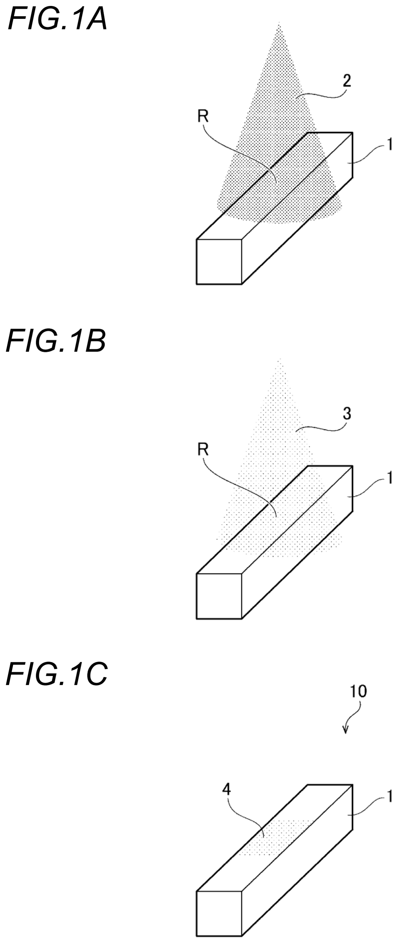

In a surface-treated metal material produced by the production method according to the embodiment of the present invention, a silane film is provided on at least a part of a surface of a metal base material. Hereinafter, each step will be described with reference to the drawings. Figs. 1A to 1C are each a perspective view showing the method for producing a surface-treated metal material according to the embodiment of the present invention in order of steps.

<Blast Treatment Step>

As shown in Fig. 1A, first, at least a part (region R) on a surface of a metal base material 1 is subjected to a blast treatment. Specifically, abrasive grains 2 for blasting or a solution containing abrasive grains is projected onto the region R at a high speed using compressed air, a motor, or the like. Accordingly, contaminants, deposits, and oxide films present on the surface of the metal base material 1 can be removed and cleaned without using a chemical solution or the like. In addition, since an uneven shape is formed in the region R by the blast treatment, joinability to a silane film to be formed in the next step can be improved.

(Kind of Blast Treatment)

The kind of the blast treatment in the blast treatment step is not particularly limited, and a dry blast method or a wet blast treatment method may be used, and the same effect can be obtained by using either treatment method. For example, a dry blast method is preferably used from an economical viewpoint since a facility is small and versatile, but since heat is generated during blasting, there is a possibility that a state of an oxide film on the surface of the metal base material 1 is influenced. In addition, abrasive grains after the blasting may remain on the surface of the material, and there is a possibility that the formation of the silane film and adhesive strength are influenced. On the other hand, a wet blast method is preferably used from the viewpoint of measures against dust and treatment stability since the heat input to the surface of the metal base material 1 is small and the remaining of the abrasive grains can be prevented, but there is a possibility that the cost increases due to an increase in size of the facility. Therefore, it is possible to select which method to use based on the required effect.

In the present embodiment, the kind of the abrasive grains is not particularly limited, and commercially available abrasive grains can be used. A grain diameter of the abrasive grains and a pressure in projecting the abrasive grains are not particularly limited, and the projection can be performed under generally used conditions. For example, the grain diameter can be 1 $\mu$m to 1000 $\mu$m and the pressure can be 0.01 MPa to 1.0 MPa.

<Water Washing Step>

After the blast treatment step, a water washing step of washing, with water, the metal base material 1 subjected to the blast treatment may be included. This water washing step is also expected to have a protective effect of avoiding adsorption of excess contaminants from the atmosphere to the metal base material 1 until a metal treatment solution is used for coating in the subsequent coating step. Therefore, if possible, it is preferable to perform the water washing step. In addition, in the case where the water washing step is performed, it is more preferable to maintain a state where water adheres in the water washing step until the subsequent coating step is performed, since the contamination of the surface can be prevented.

<Coating Step>

Next, as shown in Fig. 1B, the region R on the surface of the metal base material 1 subjected to the blast treatment is coated with a metal treatment solution 3 containing a silane compound. In the coating step, the metal base material 1 only needs to be coated such that an appropriate amount of a main component mainly containing a silane compound is present on the surface of the metal base material 1. Therefore, a method of coating the surface of the metal base material 1 with the metal treatment solution 3 is not particularly limited, and may be a coating method or an immersion method. Examples of the coating method include methods such as spraying, showering, roll coating, and coating with a brush, and an appropriate coating method is preferably selected according to a shape and a treatment area of the metal base material 1.

(Timing of Performing Coating Step)

A timing of starting the coating step is not particularly limited as long as it is after the end of the blast treatment step. However, when the surface of the metal base material 1 subjected to the blast treatment is contaminated before the start of the coating step, chemical bond formation between the silane compound in the metal treatment solution and the oxide film on the surface of the metal base material 1 is inhibited. Therefore, the time from the end of the blast treatment step to the start of the coating step is preferably as short as possible, and specifically, is preferably within 8 hours, and more preferably within 6 hours.

(Applying Step and Recovery Step)

The coating step preferably includes an applying step of applying the metal treatment solution 3 to the surface of the metal base material 1 to coat the metal base material 1 with the metal treatment solution 3, and a recovery step of recovering excess metal treatment solution generated in the applying step. According to the present embodiment, the metal treatment solution 3 can be used without reducing a concentration of the silane compound in the metal treatment solution 3, and deterioration of the solution due to elution of components in the metal base material 1 is prevented, unlike a related-art immersion process using an organic phosphonic acid or hydrofluoric acid. As to be described later, in the present embodiment, even when the concentration of the silane compound in the metal treatment solution is extremely low, a silane film having an excellent performance can be formed. Therefore, it is not necessary to replace the metal treatment solution 3 or strictly manage the concentration in the metal treatment solution 3, and the excess metal treatment solution recovered in the recovery step can be easily reused in the coating step in the production of another surface-treated metal material.

Therefore, as a method of coating the metal base material 1 with the metal treatment solution 3, it is preferable to provide a mechanism for recovering the excess metal treatment solution in the case of using the applying step. In addition, it is also preferable to make a design so as to apply the minimum necessary amount of the metal treatment solution 3. Accordingly, a consumption amount of the metal treatment solution can be extremely reduced, and theoretically, a process that does not generate a waste liquid can be designed.

(Immersion Step)

The coating step may be an immersion step of immersing the metal base material 1 in the metal treatment solution 3 to coat the surface of the metal base material 1 with the metal treatment solution 3. When the immersion step is used, the metal base material can be coated in a wide range with the metal treatment solution 3.

<Drying Step>

Thereafter, as shown in Fig. 1C, a solvent is evaporated from the metal treatment solution with which the surface of the metal base material 1 has been coated, and the metal base material 1 is dried to promote a reaction between the silane compound and the oxide film and polymerization between the silane compounds. Accordingly, a silane film 4 is formed on at least a part (region R) on the surface of the metal base material 1, and a surface-treated metal material 10 can be produced.

In the case of drying the metal base material 1, since the formation of the silane film 4 is completed when the solvent is evaporated, a drying temperature is not particularly limited and may be room temperature. However, since the silane compound forms a covalent bond by dehydration condensation during the oxide film or self-polymerization, the adhesiveness of the silane film can be improved when the drying temperature is as high as possible. On the other hand, when the drying temperature is increased, energy consumption is increased, which is disadvantageous in terms of a facility and process cost, and therefore, it is preferable to appropriately select the drying temperature according to the required level of adhesiveness and treatment productivity. For example, about 50°C to 100°C is preferred since a balance between the productivity and the energy consumption is improved.

As a drying method, a method of blowing air to the metal base material 1 is more preferred from the viewpoint of a drying rate and uniformity of the film. In addition, in steps of producing the surface-treated metal material 10, when the metal base material 1 is heated to a certain temperature, the cooling of the metal base material 1 and the removal of the solvent can be performed at once, which is efficient and economical. Note that, in order to improve soundness of the silane film 4 and maximize an adhesive force between the metal base material 1 and the silane film 4, it is preferable to repeat the coating step and the drying step 2 to 3 times. In addition, by repeatedly performing the coating step and the drying step, the erosion resistance can also be improved.

<Cleaning Step>

In the present embodiment, the cleaning step is preferably not performed after the drying step. In the present embodiment, as to be described later, a metal treatment solution containing a silane compound at an extremely low concentration can be used. Therefore, a silane film having an excellent performance can be formed without performing a cleaning step. In addition, when the cleaning step can be omitted, simplification of the step can be realized, and since no waste liquid after cleaning is generated, the burden on the environment can be reduced.

<Functional Layer Forming Step>

Although not illustrated, it is preferable that a functional layer is further formed on a surface of the surface-treated metal material 10 produced by the production method according to the present embodiment. Examples of the functional layer include an adhesive resin layer formed of an adhesive and a coating film formed of a coating material. Taking the adhesive resin layer as an example, after the drying step, an adhesive resin layer (not shown) is formed on a surface of the silane film 4. As described above, by forming the adhesive resin layer on the surface of the silane film having excellent joinability to the adhesive and durability, it is possible to simplify a step of adhesively joining the surface-treated metal material 10 and the same surface-treated metal material or other members. When the functional layer is formed directly on the surface of the silane film 4, excellent adhesive durability can be obtained between the silane film 4 and the functional layer.

A method of forming the adhesive resin layer is not particularly limited, and for example, an adhesive sheet prepared from an adhesive resin material in advance may be attached to the surface of the metal base material 1, or a method of spraying or applying the adhesive resin material to the surface of the silane film 4 may be used.

In the method for producing a surface-treated metal material according to the present embodiment, a silane film is formed using a metal treatment solution containing a silicon oxide. Silicon oxide can be activated by being made into an aqueous solution and can self-polymerize through a sol-gel reaction. A natural oxide film is formed on the metal base material. Therefore, when the oxide film on the surface of the metal base material is to be coated with the metal treatment solution, the oxide film of the metal base material reacts with the silicon oxide, and the silicon oxides are polymerized with each other. Therefore, regardless of the kind and the shape of the material of the metal base material, a silane film having an excellent joining force to the metal base material can be formed in a desired region on the surface of any metal base material.

In addition, since the silane film has high mutual solubility with an organic compound such as an adhesive or a machine oil, for example, a processing oil or a press oil, the silane film also has an excellent bonding property to the adhesive. Further, since the silane film can alleviate the influence of a machine oil such as a processing oil or a press oil even in the case of adhering thereto, it is possible to prevent a decrease in adhesive durability due to oil application and to obtain excellent erosion resistance. Therefore, when the surface-treated metal material obtained by the production method according to the present embodiment is adhesively joined to another member, an excellent joining strength can be maintained over a long period of time.

In addition, in a related-art surface treatment method, for example, a degreasing step using an alkaline solution, an etching step on an oxide film using an acidic solution, and the like are required to be performed on the surface of the metal base material, and preparation of the alkaline solution for degreasing and the acidic solution for acid etching is required. In addition, a treatment using these chemical solutions requires an immersion bath for pretreating the metal base material, and when the metal base material is large, the facility is also large, so that a large amount of chemical solution is required. Further, it is necessary to design an optimum chemical solution for acid etching depending on the kind of the metal base material, and since the metal is eluted from the metal base material, the chemical solution is deteriorated, the number of times of repeated use is limited, and a waste liquid treatment is costly.

In contrast, with the production method according to the present embodiment, a pretreatment step which has been performed in the related art is not necessary, and it is possible to proceed to the next coating step only by performing the blast treatment step. In addition, in the blast treatment, the abrasive grains can be projected onto only a desired region R on the surface of the metal base material. Therefore, a large facility is not required, facility investment can be prevented, and the pretreatment step can be simplified. In addition, since the number of pretreatment steps can be greatly reduced, a surface-treated film can be easily formed at a low cost. Further, since no waste liquid is generated, the burden on the environment can be reduced. In addition, since fine unevenness is formed on the surface of the metal base material 1 by the blast treatment step, an excellent bonding property can be obtained between the silane film 4 formed on the surface of the surface-treated metal material and the metal base material 1.

Further, as described above, when the recovery step of recovering the excess metal treatment solution is included in the coating step, the consumption amount of the metal treatment solution can be reduced, and the generation of the waste liquid can be prevented. In addition, in the case of having such a recovery step, when the concentration of the silane compound is checked before reusing the recovered excess metal treatment solution, other management is unnecessary. Therefore, a running cost for producing the surface-treated metal material can be reduced, and the productivity can be improved.

Hereinafter, materials such as the metal base material, the metal treatment solution, and the adhesive resin used in the production method according to the present embodiment will be described with specific examples.

(Metal Base Material)

The kind and the shape of the metal base material are not particularly limited as long as the metal base material is a member made of a metal. Examples of the kind of the metal include a steel sheet or plate, various plated steel sheets or plates, pure aluminum or an aluminum alloy, pure titanium or a titanium alloy, stainless steel, and copper or a copper alloy. In particular, as the aluminum alloy, for example, known alloys such as an Al-Mg-based alloy, an Al-Mg-Si-based alloy, an Al-Zn-Mg-based alloy, an Al-Si-based alloy, and an Al-Cu-based alloy can be used. In addition, as the titanium alloy, for example, known titanium alloys such as an $\alpha$ titanium alloy, a $\beta$ titanium alloy, or an $\alpha+\beta$ titanium alloy can be used. Further, as the stainless steel, known stainless steel such as austenitic stainless steel, ferritic stainless steel, martensitic stainless steel, and two-phase stainless steel can be used.

(Metal Treatment Solution)

The metal treatment solution only needs to be a solution containing a silane compound, and for example, a solvent containing 50 mass% to 99.99 mass% of water and 0 mass% to 50 mass% of an organic solvent can be used. A mass of water with respect to a total mass of the solution is more preferably 50 mass% to 99.95 mass%. Note that, from the viewpoint of reducing an amount of a volatile organic compound (VOC) and reducing a risk of explosion, a main component of the solvent is preferably water. However, in order to reduce a surface tension of the metal treatment solution to improve water wettability and coatability and to increase the drying rate, for example, the following organic solvent may be contained.

In the case of using an organic solvent, various water-soluble solvents such as various alcohols and polyethers, for example, methanol, ethanol, propyl alcohol, butanol (including isomers), glycol-based solvents and ethers thereof can be used as the kind of the organic solvent.

The metal treatment solution preferably contains the silane compound in a content of 0.01 mass% or more and 1 mass% or less, and the silane compound preferably contains an alkyl silicate or an oligomer thereof and a hydrolysate of an organic silane compound or a polymer thereof. The concentration of the silane compound with respect to a total mass of the metal treatment solution is more preferably 0.05 mass% or more and 0.5 mass% or less. Note that, the concentration of the silane compound can be adjusted based on a coating amount of the metal treatment solution with which the surface of the metal base material is coated. As the silane compound contained in the metal treatment solution, specifically, 0.005 mass% or more and less than 1 mass% of an alkyl silicate or an oligomer thereof and 0.005 mass% or more and less than 1 mass% of a hydrolysate of an organic silane compound or a polymer thereof are preferably used.

When the specific metal treatment solution as described above is applied to at least a part of the surface of the metal base material, an alkyl silicate or an oligomer thereof is introduced into the surface of the base material, and a composite oxide film containing the metal constituting the metal base material and silicon is formed. Then, in the subsequent drying step, a silane film made of the organic silane compound in which the organic silane compound and the composite oxide film are chemically bonded to each other is formed. In this way, it is possible to obtain a surface-treated metal material which has an excellent bonding property to an adhesive, which has extremely excellent erosion resistance, which is less likely to decrease in adhesive strength even when exposed to a high-temperature and humid environment, and which has excellent adhesive durability. In addition, when the metal treatment solution is used, since a surface treatment using the alkyl silicate or an oligomer thereof and a surface treatment using the organic silane compound can be performed in one step, a surface-treated metal material having excellent adhesive durability can be produced in a simplified step, and a facility investment cost and a production cost can be reduced.

The metal treatment solution preferably has a pH of 2 or more and 7 or less. When the pH of the metal treatment solution is higher than 7, the alkyl silicate or an oligomer thereof tends to be excessively polymerized, and storage stability of the solution may decrease, which is not preferred. In addition, when the polymerization of the alkyl silicate or an oligomer thereof proceeds, the generated silane film is thick, and when a stress is applied, breakage occurs inside the silane film, and a high adhesive strength cannot be obtained. Therefore, the pH of the metal treatment solution is preferably 7 or less, and more preferably 6 or less from the viewpoint of the stability of the alkyl silicate.

On the other hand, when the pH of the metal treatment solution is lower than 2, the dissolution of the surface of the base material is severe, and the silane film is non-uniform, so that it is difficult to exhibit stable adhesiveness. Therefore, the pH of the metal treatment solution is preferably 2 or more, and more preferably 3 or more in consideration of reactivity with a metal oxide film. Note that, the pH of the metal treatment solution can be appropriately adjusted by adding, for example, an acid such as hydrochloric acid, sulfuric acid, nitric acid, or acetic acid.

A concentration of the alkyl silicate or an oligomer thereof in the metal treatment solution is preferably 0.005 mass% or more and less than 1 mass%. When the concentration of the alkyl silicate or an oligomer thereof in the metal treatment solution is 1 mass% or more, the generated silane film is thick, and the strength may decrease. Therefore, the concentration of the alkyl silicate or an oligomer thereof in the metal treatment solution is preferably less than 1 mass%, more preferably less than 0.5 mass%, and still more preferably less than 0.2 mass%.

On the other hand, when the concentration of the alkyl silicate or an oligomer thereof in the metal treatment solution is less than 0.005 mass%, the concentration of the alkyl silicate or an oligomer thereof is too low, so that the composite oxide film containing the metal constituting the metal base material and silicon cannot be sufficiently formed, and sufficient adhesive durability may not be obtained. Therefore, the concentration of the alkyl silicate or an oligomer thereof in the metal treatment solution is preferably 0.005 mass% or more, more preferably 0.01 mass% or more, and still more preferably 0.02 mass% or more.

A concentration of the organic silane compound in the metal treatment solution is preferably 0.005 mass% or more and less than 1 mass%. When the concentration of the organic silane compound in the metal treatment solution is 1 mass% or more, the generated silane film is thick, and the strength may decrease. In addition, the stability of the solution also decreases. Therefore, the concentration of the organic silane compound in the metal treatment solution is preferably less than 1 mass%, more preferably less than 0.5 mass%, and still more preferably less than 0.2 mass%.

On the other hand, when the concentration of the organic silane compound in the metal treatment solution is less than 0.005 mass%, the concentration of the organic silane compound is too low, so that a surface-treated film containing the organic silane compound cannot be sufficiently formed, and sufficient adhesive durability cannot be obtained. Therefore, the concentration of the organic silane compound in the metal treatment solution is preferably 0.005 mass% or more, more preferably 0.01 mass% or more, and still more preferably 0.02 mass% or more.

In the case where, contained as the silane compound in the metal treatment solution, a mass of the alkyl silicate or an oligomer thereof is X and a mass of the hydrolysate of the organic silane compound or a polymer thereof is Y, a ratio of X to Y is preferably 4:1 to 1:4. The ratio of X to Y is more preferably 2:1 to 1:2. In order to control the polymerization of these substances and stabilize the metal treatment solution, the metal treatment solution preferably contains an acid in an amount of 10 mass% or less with respect to a total mass of the silane compound.

In a silane film composed of the alkyl silicate or an oligomer thereof and the hydrolysate of the organic silane compound or a polymer thereof, a film amount is preferably adjusted to an optimum range in order to exhibit sufficient adhesive durability. When the film amount of the silane film is less than 0.1 mg/m$^2$, the metal surface cannot be sufficiently covered with the film, and it may be difficult to obtain desired adhesive durability. On the other hand, when the film amount of the silane film is more than 20 mg/m$^2$, the silane film is bulky, so that the adhesion of the silane film to the metal base material is insufficient, and breakage starting from the silane film may occur, which may make it difficult to obtain desired adhesive strength. Therefore, the film amount of the silane film is preferably 0.1 mg/m$^2$ or more and 20 mg/m$^2$ or less, and more preferably 0.5 mg/m$^2$ or more and 15 mg/m$^2$ or less. By designing the ratio of X to Y and the content thereof in the silane compound in the metal treatment solution to be within the above ranges to prepare the metal treatment solution, a preferred film amount of the silane film can be achieved.

The kind of the alkyl silicate or an oligomer thereof contained in the metal treatment solution is not particularly limited, and a silicate, a tetraalkoxy orthosilicate, or an oligomer thereof is preferred from the viewpoint of not generating a by-product that causes erosion of the film or deterioration of the adhesive resin after the reaction. Among them, tetraethyl orthosilicate (TEOS) or a polymer (oligomer) thereof is preferably used since it is neutral and no alkali remains after the silane film is formed. Note that, the polymer includes an oligomer and the like. Here, as the alkyl silicate or an oligomer thereof, only one kind may be used alone, or two or more kinds may be used in combination.

The kind of the organic silane compound contained in the metal treatment solution is not particularly limited, and the organic silane compound may include a silane compound having a plurality of hydrolyzable trialkoxyl groups in the molecule, a hydrolysate thereof, or a polymer thereof. The silane compound having a plurality of hydrolyzable trialkoxyl groups in the molecule not only forms a dense siloxane bond by self-polymerization, but also has high reactivity with a metal oxide and forms a chemically stable bond, so that wet durability of the silane film can be further improved. In addition, the silane film has high mutual solubility with an organic compound such as an adhesive or a machine oil, for example, a processing oil or a press oil, and can alleviate the influence of a machine oil such as a processing oil or a press oil even when the film adheres thereto. Therefore, the silane film also plays a role of preventing a decrease in adhesive durability due to oil application. The kind of the silane compound is not particularly limited, and from the viewpoint of economy, a silane compound having two hydrolyzable trialkoxysilyl groups in the molecule (bissilane compound) is preferred, and for example, bistrialkoxysilylethane, bistrialkoxysilylbenzene, bistrialkoxysilylhexane, bistrialkoxysilylpropylamine, or bistrialkoxysilylpropyltetrasulfide can be used. In particular, from the viewpoint of versatility, economy, and stability of the aqueous solution, bistrialkoxysilylethane is preferably used, and bistriethoxysilylethane (BTSE) is more preferably used. Here, as the organic silane compound, only one kind may be used alone, or two or more kinds may be used in combination.

In addition, the organic silane compound may contain a silane coupling agent having a reactive functional group capable of chemical bonding to an organic resin component, a hydrolysate thereof, or a polymer thereof. For example, when a silane coupling agent having a reactive functional group such as an amino group, an epoxy group, a methacrylic group, a vinyl group, or a mercapto group is used alone or in combination with the silane compound, a chemical bond is formed between the film and the resin, and the adhesive durability can be further improved. Note that, the functional group in the silane coupling agent is not limited to those described above, and a silane coupling agent having various functional groups can be appropriately selected and used according to the adhesive resin to be used. Suitable specific examples of the silane coupling agent include 3-aminopropyltrimethoxysilane, 3-aminopropyltriethoxysilane, 3-(N-aminoethyl)-aminopropyltrimethoxysilane, 3-(N-aminoethyl)-aminopropyltriethoxysilane, 3-mercaptopropyltrimethoxysilane, 3-mercaptopropyltriethoxysilane, 3-glycidoxypropyltrimethoxysilane, 3-glycidoxypropyltriethoxysilane, 3-methacryloxypropyltrimethoxysilane, and 3-methacryloxypropyltriethoxysilane. Here, as the silane coupling agent, only one kind may be used alone, or two or more kinds may be used in combination.

In the present embodiment, when the metal treatment solution contains a particulate inorganic compound having a diameter of 10 nm or more (hereinafter, also simply referred to as a "particulate inorganic compound"), an additional step such as water washing for removing the silane film is required after the silane film is formed. In addition, the formed silane film is thick, and the adhesive strength and the adhesive durability may decrease. Therefore, the metal treatment solution preferably is substantially free of a particulate inorganic compound. Note that, "the metal treatment solution is substantially free of a particulate inorganic compound" is not limited to an aspect in which the solution does not contain the particulate inorganic compound at all, and the solution may contain the particulate inorganic compound at an impurity level. Specifically, a content of the particulate inorganic compound is preferably regulated to 0.05 mass% or less with respect to a total amount of the metal treatment solution. Examples of the particulate inorganic compound include sols of inorganic oxides such as silica and alumina. Note that, the diameter of the particulate inorganic compound represents a diameter measured by observing a solid content after drying a treatment solution using a transmission electron microscope (TEM) or measuring a diluted treatment solution using a solution particle counter.

Note that, the metal treatment solution may further contain one or more of a stabilizer, an auxiliary agent, and the like, as necessary, in addition to the alkyl silicate or an oligomer thereof, and the organic silane compound. For example, the stabilizer may contain an organic compound such as a carboxylic acid having 1 to 4 carbon atoms, such as formic acid or acetic acid, or an alcohol having 1 to 4 carbon atoms, such as methanol or ethanol.

Note that, examples of a method for preparing the metal treatment solution include, but are not limited to, the following preparation method. First, an organic silane compound and a small amount of acetic acid as a catalyst are added to a mixed solution containing an alcohol, such as ethanol, and water to sufficiently hydrolyze the organic silane compound, thereby obtaining an organic silane compound aqueous solution. Next, an aqueous solution of an alkyl silicate or an oligomer thereof is prepared by the same method, the two solutions are mixed, and then the mixture is diluted with water so as to have a predetermined concentration of the silane compound, thereby preparing a metal treatment solution. In addition, since the alkyl silicate or an oligomer thereof is basic and easily polymerized, in the case of using a basic compound as the organic silane compound, it is preferable to prepare the solution after neutralizing the organic silane solution using acetic acid or the like in advance in order to avoid excessive polymerization of the alkyl silicate or an oligomer thereof when the solution is mixed.

(Adhesive Resin Layer)

In the present invention, a resin constituting the adhesive resin layer is not particularly limited, and an adhesive resin that has been used in the related art for joining a titanium or titanium alloy material, such as an epoxy-based resin, a urethane-based resin, a nitrile-based resin, a nylon-based resin, or an acrylic resin, can be used. A thickness of the adhesive resin layer is not particularly limited, and is preferably 10 $\mu$m to 500 $\mu$m, and more preferably 50 $\mu$m to 400 $\mu$m from the viewpoint of improving the adhesive strength.

[Method for Producing Joined Body]

A method for producing a joined body according to the present embodiment is a method for producing a joined body including the above surface-treated metal material. Specifically, the method includes a joining step of joining a first member and a second member via an adhesive resin layer, and at least one of the first member and the second member is the above surface-treated metal material. In the joining step, the silane film of the surface-treated metal material and the adhesive resin layer are disposed so as to be in contact with each other, and the first member and the second member are joined to each other.

In the case where the second member is the surface-treated metal material 10 shown in Fig. 1C, for example, it is sufficient that the adhesive resin layer is formed in the region R where the silane film 4 is formed by the method described in the adhesive resin layer forming step, and the first member (not shown) is joined to be in contact with the adhesive resin layer. The method of forming the adhesive resin layer is not particularly limited, and as described above, an adhesive sheet produced from an adhesive resin material may be used, or a method of spraying or applying the adhesive resin material to the surface of the silane film may be used.

According to the present embodiment, since the surface-treated metal material that can be easily produced at a low cost as described above is used, a joined body having excellent adhesive durability can be easily produced at a low cost. In the present embodiment, only one of the first member and the second member may be the surface-treated metal material produced by the [Method For Producing Surface-treated Metal Material], or both may be the surface-treated metal material produced by the [Method For Producing Surface-treated Metal Material]. In the case where only one (first member) of the members is the surface-treated metal material, examples of the other member (second member) include a metal member not subjected to a surface treatment and a resin molded body not subjected to a surface treatment. As the metal member not subjected to a surface treatment, various metal members such as a titanium or titanium alloy member, an aluminum or aluminum alloy member, a stainless steel member, and a copper or copper alloy member can be used.

In the case where both the first member and the second member are the surface-treated metal material produced by the above [Method For Producing Surface-treated Metal Material], metal base materials constituting the surface-treated metal materials may be the same as or different from each other. For example, a surface-treated metal material using various metal base materials such as a titanium or titanium alloy material, an aluminum or aluminum alloy material, a stainless steel material, and a copper or copper alloy material can be used for each of the first member and the second member.

As the resin molded body, it is possible to use, for example, a fiber-reinforced plastic molded body formed of various fiber-reinforced plastics such as a glass fiber-reinforced plastic (GFRP), a carbon fiber-reinforced plastic (CFRP), a boron fiber-reinforced plastic (BFRP), an aramid fiber-reinforced plastic (AFRP, KFRP), a polyethylene fiber-reinforced plastic (DFRP), and a Zylon reinforced plastic (ZFRP). By using these fiber-reinforced plastic molded bodies, it is possible to reduce a weight of the joined body while maintaining a certain strength.

Note that, as the resin molded body, in addition to the above fiber-reinforced plastics, it is also possible to use non-fiber-reinforced engineering plastics such as a polypropylene (PP), an acryl-butadiene-styrene copolymer (ABS) resin, a polyurethane (PU), a polyethylene (PE), a polyvinyl chloride (PVC), nylon 6, nylon 6,6, a polystyrene (PS), a polyethylene terephthalate (PET), a polyamide (PA), a polyphenylene sulfide (PPS), a polybutylene terephthalate (PBT), and a polyphthalamide (PPA).

In the above embodiment, an example in which the adhesive resin layer for producing the joined body is formed on the surface-treated metal material has been described, but in the present invention, as described above, a coating film may be formed by adhering a coating material to at least a part of the silane film. In the surface-treated metal material produced by the production method according to the present embodiment, since the adhesiveness between the metal base material and the silane film is excellent and the joinability between the silane film and the coating material is also excellent, the effect of preventing peeling off of the coating material can be obtained.

Examples

Hereinafter, the present invention will be described in more detail with reference to Examples, but the present invention is not limited to these Examples, and modifications can be made within the scope that can conform to the gist of the present invention, and all of them are included in the technical scope of the present invention. The following various production conditions are examples, and the present embodiment is not limited to the following conditions.

[Production of Surface-treated Metal Materials]

<Preparation of Base Material>

First, sheet or plate materials made of various metal materials were cut so as to have a length of 100 mm in a longitudinal direction and a width of 25 mm, and two metal base materials were prepared under test conditions. The kinds of the metal materials are shown below.

Aluminum alloy (JIS A7075): 3.8 mm in thickness
Aluminum alloy (JIS A5052): 2 mm in thickness
Pure titanium (JIS standard type 1): 1.2 mm in thickness
Stainless steel (JIS SUS304): 1 mm in thickness

<Blast Treatment Step>

Next, an evaluation range for the metal base material was set to 10 mm from an end portion in the longitudinal direction and 25 mm in a width direction, and all the base materials were subjected to a dry or wet blast treatment in the evaluation range and then washed with water for 1 minute. The treatment conditions in the blast treatment were as follows.

(Dry Blast Treatment Conditions)

Dry blasting apparatus: shot blasting apparatus (NAB-3K) manufactured by NISSAN KIKO Co., Ltd.
Grinding material: abrasive grain white random: WA #150, manufactured by Showa Denko K.K.

Blast pressure: 0.7 (MPa)

(Wet Blast Treatment Conditions)

Wet blasting apparatus: BABY Blast II (model: MBBII-25) manufactured by MACOHO Co., Ltd.
Grinding material: abrasive grain white random: WA #150, WA #320, manufactured by Showa Denko K.K.

Air pressure: 0.12 MPa
Gun moving speed: 10 mm/sec

<Coating Step>

Thereafter, each metal base material was immersed in a metal treatment solution shown below at room temperature for 10 seconds, and then pulled up. Then, the resultant was dried at a temperature of 100°C for 60 seconds in a blow drying furnace to prepare a silane film, thereby obtaining a surface-treated metal material. The production conditions for each surface-treated metal material are shown in Table 1 below.

(Metal Treatment Solution)

Bistriethoxysilylethane (BTSE): 0.1 g
Tetraethyl orthosilicate (TEOS): 0.1 g
Ethanol: 2.0 g
Acetic acid: 0.001 g
Water: 97.8 g

[Production of Joined Body]

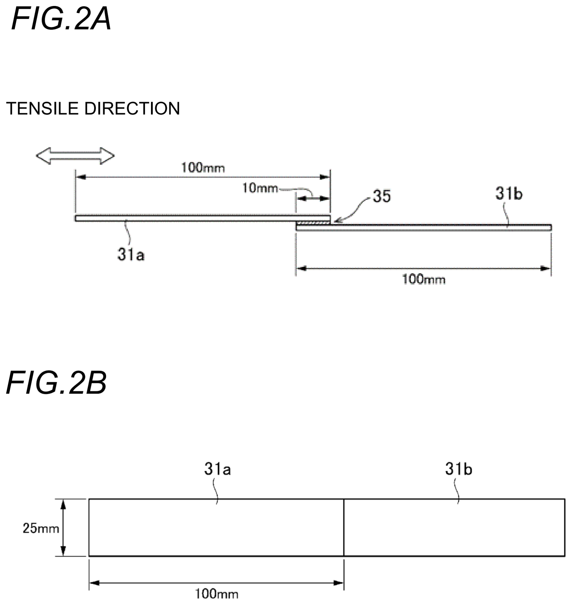

Thereafter, the metal base materials prepared were joined two by two by an adhesive to obtain a joined body. Fig. 2A is a side view showing a shape of the joined body, and Fig. 2B is a plan view thereof. As shown in Figs. 2A and 2B, an adhesive resin layer 35 was formed in an evaluation range on a surface of a surface-treated metal material 31b (second member), and a surface-treated metal material 31a (first member) having the same configuration as the surface-treated metal material 31b was disposed to overlap the adhesive resin layer 35. Note that, a lap length was set to 10 mm, and the surface-treated metal material 31a and the surface-treated metal material 31b were disposed to only overlap at a region of 10 mm from end portions.
In this example, since the silane film was formed on both the surface-treated metal material 31a and the surface-treated metal material 31b in the above evaluation range, the surface-treated metal material 31a and the surface-treated metal material 31b were disposed via the adhesive resin layer 35 such that regions of 10 mm $\times$ 25 mm on which the silane film was formed faced each other. Note that, as the material of the adhesive resin layer, an epoxy resin-based adhesive for a thermosetting structure was used. In addition, a small amount of glass beads (grain diameter: 250 $\mu$m) was added to the adhesive resin material to adjust the thickness of the adhesive resin layer 35 to 250 $\mu$m. After the surface-treated metal materials were disposed to overlap as described above, the surface-treated metal materials were dried at room temperature for 30 minutes and further heated at 180°C for 30 minutes to be thermally cured. Thereafter, the resultant was allowed to stand at room temperature for 24 hours to prepare a joined body.

[Evaluation of Joined Body]

<Deterioration Test>

A deterioration test was performed a part of the obtained joined body in order to evaluate the adhesive durability. In the deterioration test, the joined body was immersed in a 40°C 5% NaCl solution.

<Tensile Test>

The obtained joined body was subjected to a tensile test in order to evaluate the adhesiveness. As tensile conditions, both end portions of the joined body were pulled in a tensile direction indicated by an arrow in Fig. 2A at a tensile speed of 50 mm/min to be broken. Thereafter, broken surfaces of the surface-treated metal material 31a (first member) and the surface-treated metal material 31b (second member) were observed, and an area of a region where interface peeling occurred between the surface-treated metal material 31a and the adhesive resin layer (interface peeling area of the first member) and an area of a contact surface between the surface-treated metal material 31a and the adhesive resin layer (adhesive area of the first member) were measured. Similarly, an area of a region where interface peeling occurred between the surface-treated metal material 31b and the adhesive resin layer (interface peeling area of the second member) and an area of a contact surface between the surface-treated metal material 31b and the adhesive resin layer (adhesive area of the second member) were measured. Then, a cohesive failure rate was calculated according to the following equation (2). The conditions in the deterioration test and the calculation results of the cohesive failure rate are shown in Table 1 below.

$$\text{Cohesive failure rate (\%)} = 100 - \{(\text{interface peeling area of first member/adhesive area of first member}) \times 100 + (\text{interface peeling area of second member/adhesive area of second member}) \times 100\} \tag{2}$$

[Table 1]

Table 1

| Example No. | Production condition | | | Adhesive durability evaluation | |
|---|---|---|---|---|---|
| | Type of metal base material | Blasting condition | Blast grain | Deterioration test condition | Cohesive failure rate |
| 1 | Aluminum alloy (7075) | Dry | WA #150 | 5% NaCl, immersion for 21 days | 88% |
| 2 | Aluminum alloy (7075) | Wet | WA #150 | 5% NaCl, immersion for 21 days | 100% |
| 3 | Aluminum alloy (A5052) | Wet | WA #320 | 5% NaCl, immersion for 20 days | 100% |
| 4 | Pure titanium | Wet | WA #320 | No immersion | 100% |
| 5 | Stainless steel (SUS304) | Wet | WA #320 | 5% NaCl, immersion for 20 days | 100% |

As shown in Example No. 1 to Example No. 5 in Table 1, the silane film can be formed simply by performing the blast treatment step as the pretreatment regardless of the kind of the metal base material. Therefore, the burden on the environment can be reduced, and the surface-treated metal material can be easily produced at a low cost. In addition, the formed silane film has excellent joinability to the metal base material and also has excellent adhesive durability. Further, since a silane film having an excellent performance can be formed, the joinability to the adhesive resin layer is excellent, and an excellent cohesive failure rate can be exhibited.

Although various embodiments are described above, it is needless to say that the present invention is not limited to these embodiments. It is apparent that those skilled in the art can conceive of various modifications and alterations within the scope described in the claims, and it is understood that such modifications and alterations naturally fall within the technical scope of the present invention. In addition, the respective constituent elements in the above embodiment may be freely combined without departing from the gist of the invention.

Note that, the present application is based on a Japanese Patent Application (Patent Application No. 2023-080412) filed on May 15, 2023, contents of which are incorporated herein by reference.

REFERENCE SIGNS LIST

1: metal base material
2: abrasive grain
3: metal treatment solution
4: silane film
10: surface-treated metal material
31a: surface-treated metal material (first member)
31b: surface-treated metal material (second member)
35: adhesive resin layer

**Claims**

1. A method for producing a surface-treated metal material in which a silane film is provided on at least a part of a surface of a metal base material, the method comprising:

   a blast treatment step of performing a blast treatment on at least a part of the surface of the metal base material;
   a coating step of coating, with a metal treatment solution containing a silane compound, the surface of the metal base material subjected to the blast treatment; and
   a drying step of drying the metal base material coated with the metal treatment solution to form a silane film.

2. The method for producing a surface-treated metal material according to claim 1, wherein a cleaning step is not performed after the drying step.

3. The method for producing a surface-treated metal material according to claim 1, wherein

   the metal treatment solution contains the silane compound in a content of 0.01 mass% or more and 1 mass% or less, and
   the silane compound contains an alkyl silicate or an oligomer thereof and a hydrolysate of an organic silane compound or a polymer thereof.

4. The method for producing a surface-treated metal material according to claim 1, further comprising:

   a water washing step of washing, with water, the metal base material subjected to the blast treatment, between the blast treatment step and the coating step, wherein
   the coating step is performed in a state where water in the water washing step adheres to the surface subjected to the blast treatment.

5. The method for producing a surface-treated metal material according to claim 1, wherein a time from an end of the blast treatment step to a start of the coating step is within 8 hours.

6. The method for producing a surface-treated metal material according to claim 1, wherein a content of a particulate inorganic compound having a diameter of 1 nm or more is 0.05 mass% or less with respect to a total mass of the metal treatment solution.

7. The method for producing a surface-treated metal material according to claim 1, wherein

   the coating step includes

   an applying step of applying the metal treatment solution to the metal base material to coat the surface of the metal base material with the metal treatment solution, and
   a recovery step of recovering excess metal treatment solution generated in the applying step, and

the excess metal treatment solution is reused in the coating step during production of another surface-treated metal material.

8. The method for producing a surface-treated metal material according to claim 1, wherein
the coating step includes an immersion step of immersing the metal base material in the metal treatment solution to coat the surface of the metal base material with the metal treatment solution.

9. The method for producing a surface-treated metal material according to any one of claims 1 to 8, wherein the silane film is an object onto which an adhesive or a coating material is directly coated on its surface.

10. The method for producing a surface-treated metal material according to claim 9, wherein

the surface-treated metal material has a functional layer in contact with the surface of the silane film,
the functional layer is an adhesive resin layer or a coating film formed of the adhesive or the coating material, and
the method comprises a functional layer forming step of forming the functional layer on the surface of the silane film after the drying step.

11. A method for producing a joined body including a surface-treated metal material produced by the production method according to any one of claims 1 to 8, the method comprising:

a joining step of joining a first member and a second member via an adhesive resin layer, wherein
at least one of the first member and the second member is the surface-treated metal material, and
in the joining step, the silane film of the surface-treated metal material and the adhesive resin layer are disposed so as to be in contact with each other, and the first member and the second member are joined to each other.

*FIG.1A*

*FIG.1B*

*FIG.1C*

## FIG.2A

TENSILE DIRECTION

## FIG.2B

## INTERNATIONAL SEARCH REPORT

<table>
<tr><td></td><td>International application No.<br><br>**PCT/JP2024/016665**</td></tr>
</table>

**A. CLASSIFICATION OF SUBJECT MATTER**

*C23C 26/00*(2006.01)i; *B05D 3/12*(2006.01)i; *B05D 7/14*(2006.01)i; *B05D 7/24*(2006.01)i; *C09D 5/00*(2006.01)i; *C09D 7/61*(2018.01)i; *C09D 183/02*(2006.01)i; *C09D 183/04*(2006.01)i; *C09D 201/00*(2006.01)i; *C09J 5/00*(2006.01)i; *C09J 7/30*(2018.01)i; *C09J 201/00*(2006.01)i; *C23C 28/00*(2006.01)i

FI: C23C26/00 A; B05D7/14 P; B05D3/12 B; B05D7/24 302Y; C23C28/00 Z; C09D183/02; C09D183/04; C09D7/61; C09D5/00 D; C09J5/00; C09J201/00; C09J7/30; C09D201/00

According to International Patent Classification (IPC) or to both national classification and IPC

**B. FIELDS SEARCHED**

Minimum documentation searched (classification system followed by classification symbols)

C23C26/00; B05D3/12; B05D7/14; B05D7/24; C09D5/00; C09D7/61; C09D183/02; C09D183/04; C09D201/00; C09J5/00; C09J7/30; C09J201/00; C23C28/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-034881 A (KAWASAKI SEITETSU KK) 07 February 2003 (2003-02-07) paragraphs [0026]-[0033] | 1, 2, 5, 8-10 |
| Y | | 3, 4, 6, 7, 11 |
| Y | JP 2017-203186 A (KABUSHIKI KAISHA KOBE SEIKO SHO) 16 November 2017 (2017-11-16) paragraphs [0034]-[0041], [0069]-[0090] | 3, 6, 11 |
| Y | JP 2010-090444 A (JFE METAL PRODUCTS & ENGINEERING INC.) 22 April 2010 (2010-04-22) paragraphs [0057]-[0060] | 4, 11 |

✓ Further documents are listed in the continuation of Box C.    ✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/016665**

### C.    DOCUMENTS CONSIDERED TO BE RELEVANT

| Category* | Citation of document, with indication, where appropriate, of the relevant passages | Relevant to claim No. |
|---|---|---|
| Y | CN 214075431 U (SHANGHAI FUFU MACHINERY TECHNOLOGY CO., LTD.) 31 August 2021 (2021-08-31) paragraphs [0005]-[0013] | 7, 11 |
| A | CN 108758102 A (CHINA NATIONAL PETROLEUM CORPORATION) 06 November 2018 (2018-11-06) paragraphs [0032]-[0050] | 1-11 |
| A | CN 113459396 A (ZHEJIANG NORMAL UNIVERSITY) 01 October 2021 (2021-10-01) paragraphs [0070]-[0079] | 1-11 |

Form PCT/ISA/210 (second sheet) (July 2022)

**INTERNATIONAL SEARCH REPORT**
Information on patent family members

| International application No. |
| --- |
| **PCT/JP2024/016665** |

| Patent document cited in search report | | | Publication date (day/month/year) | Patent family member(s) | | | Publication date (day/month/year) |
| --- | --- | --- | --- | --- | --- | --- | --- |
| JP | 2003-034881 | A | 07 February 2003 | (Family: none) | | | |
| JP | 2017-203186 | A | 16 November 2017 | US | 2019/0177854 | A1 | |
| | | | | paragraphs [0041]-[0049], [0081]-[0111] | | | |
| | | | | WO | 2017/195803 | A1 | |
| | | | | EP | 3456861 | A1 | |
| | | | | CN | 109072440 | A | |
| | | | | KR | 10-2019-0003737 | A | |
| JP | 2010-090444 | A | 22 April 2010 | (Family: none) | | | |
| CN | 214075431 | U | 31 August 2021 | (Family: none) | | | |
| CN | 108758102 | A | 06 November 2018 | (Family: none) | | | |
| CN | 113459396 | A | 01 October 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017197838 A
- JP 2017203209 A
- WO 2018207685 A
- JP 2020528339 A
- JP 7084957 B
- JP 2023080412 A